# FASCICULE DE BREVET EUROPEEN

(11) **EP 3 046 810 B1**
(45) Date de publication et mention de la délivrance du brevet: **05.04.2017**
(21) Numéro de dépôt: 14793206.5
(22) Date de dépôt: 12.09.2014
(51) Int. Cl.: B60R 16/02, H02G 3/04

(54) **STRUCTURE AVANT DE VEHICULE AUTOMOBILE AVEC CABLE D'ALIMENTATION ELECTRIQUE**
VORDERBAU EINES KRAFTFAHZEUGS MIT ELEKTRISCHER LEITUNG
FRONT STRUCTURE OF MOTOR VEHICLE COMPRISING AN ELECTRIC CABLE

(30) Priorité: 20.09.2013 FR 1359061
(43) Date de publication de la demande: 27.07.2016
(73) Titulaire: Renault S.A.S., 92100 Boulogne-Billancourt (FR)
(72) Inventeur: PAROLINI, Pascal, F-95720 Le Mesnil Aubry (FR); BLANC, Lionel, F-92320 Chatillon (FR); FRANCINI, Sylvain, F-28320 Gas (FR); MARREL, Sylvain, F-28100 Dreux (FR)
(86) Numéro de dépôt international: PCT/FR2014/052275
(87) Numéro de publication internationale: WO 2015/040313

(56) Documents cités:
- EP-A2- 1 762 449
- EP-B1- 1 563 516
- FR-A1- 2 935 652
- GB-A- 2 379 479
- US-B1- 6 168 122

## Description

L'invention concerne une structure avant de véhicule automobile à parcours de câble d'alimentation électrique amélioré, notamment pour l'alimentation d'un dispositif électrique de petite dimension, voir US6168122B.

Certains véhicules actuels de type véhicule hybride (véhicules dits HEV « Hybrid Electric Véhicule » ou PHEV « Plug-in Hybrid Electric Vehicle » en terminologie anglo-saxonne) comprennent un petit dispositif électrique, disposé dans le compartiment moteur et alimenté en électricité par une batterie située à l'arrière du véhicule. Il est alors nécessaire de relier la batterie au petit dispositif électrique par un câble d'alimentation électrique. Ce câble présente cependant une section assez grande et un poids non négligeable qui rendent son intégration au niveau du compartiment moteur parfois difficile en raison du peu d'espace disponible. De plus, il est nécessaire de prévoir des moyens de fixation qui assurent un bon maintien du câble lors de l'utilisation du véhicule, et ce, malgré le poids du câble.

Actuellement, l'encombrement à l'intérieur du compartiment moteur est tel que les différents câbles sont généralement disposés à des emplacements différents d'un véhicule à un autre, engendrant des coûts de montage plus importants du fait de la diversité des parcours de câble existants. En outre, ces câbles étant parfois disposés autour d'éléments présents dans le compartiment moteur, il peut s'avérer difficile de concilier le montage de ces éléments et le montage du câble, complexifiant le processus de montage et les coûts en résultant.

Il est également connu de faire passer un câble d'alimentation électrique d'un démarreur à l'intérieur d'éléments de structure avant du véhicule, tel que décrit dans le document EP 1 318 050 B1. Un tel agencement peut permettre de protéger le câble sur une partie de son parcours, notamment en cas de collision. Toutefois, un tel montage ne permet pas un contrôle et une maintenance du câble au cours de la vie du véhicule.

Il existe donc un besoin pour la réalisation d'un agencement de câble au niveau de la structure avant du véhicule, qui soit simple à monter et ne perturbe pas les opérations de montage de la structure avant et notamment des éléments du compartiment moteur.

A cet effet, l'objet de l'invention concerne une structure avant de véhicule automobile comprenant :
- un compartiment moteur,
- des éléments de structure longitudinaux et transversaux délimitant le compartiment moteur,
- au moins un dispositif électrique positionné à l'intérieur du compartiment moteur et au moins un câble d'alimentation électrique associé dont une extrémité est connectée audit dispositif électrique et dont l'autre extrémité est destinée à être connectée à une batterie,
caractérisée en ce que la structure comprend :
- au moins un élément support allongé comprenant au moins une empreinte longitudinale recevant une portion d'un câble sur toute la longueur de ladite portion,
- des moyens de maintien de ladite au moins une portion de câble sur ledit élément support,
- des moyens de fixation dudit élément support sur un élément de structure.

L'élément de structure comprend une paroi longitudinale inférieure, ledit élément support étant positionné le long de cette paroi, l'élément support présentant une forme de goulotte ouverte longitudinalement, dont une face comporte au moins une empreinte recevant chacune une portion de câble sensiblement dans un même plan et dont la face opposée est solidarisée à une paroi de l'élément de structure, la paroi longitudinale inférieure étant en outre située sur le dessous du longeron, la paroi longitudinale inférieure étant en outre située sur le dessous du longeron.

L'élément support, fixé à l'élément de structure, reçoit et maintient ainsi une portion de câble dans chaque empreinte. Chaque portion de câble peut en outre être positionnée sur l'élément support aisément par simple mise en place dans une empreinte, laquelle forme finalement une sorte de goulotte ouverte sur toute sa longueur.

L'agencement selon l'invention permet ainsi de solidariser de manière sûre et simple un ou plusieurs câbles, généralement deux, sur une partie rigide du véhicule. En outre, l'élément de structure s'étendant à proximité du compartiment moteur, le ou les câbles logés dans l'élément support restent à proximité du dispositif électrique auquel ils doivent être raccordés.

Un élément de structure se présente généralement sous la forme d'un profilé allongé de section ouverte ou fermée sensiblement rectangulaire. Il comprend ainsi plusieurs parois longitudinales, dont généralement une paroi longitudinale inférieure, située en regard du sol, autrement dit s'étendant dans un plan longitudinal et transversal du véhicule. Un élément de structure peut également comprendre une paroi longitudinale s'étendant le long du profilé, dans un plan sensiblement vertical, le long de la paroi longitudinale inférieure.

Avantageusement et de manière non limitative, ledit élément support peut être positionné le long d'une paroi longitudinale inférieure de l'élément de structure. Ceci permet de positionner l'élément support à proximité du compartiment moteur, dans une zone inférieure de l'élément de structure généralement peu encombrée, de sorte qu'un élément support relativement long peut être placé en cet endroit.

Cette paroi longitudinale inférieure peut s'étendre dans un plan sensiblement horizontal ou sensiblement vertical.

Ce plan horizontal peut être défini comme un plan contenant les éléments de structure longitudinaux et transversaux. La direction des éléments de structure longitudinaux de la structure avant définit l'axe longitudinal de la structure avant, la direction des éléments de structure transversaux définissant l'axe transversal de la structure avant.

Avantageusement et de manière non limitative, ledit élément support est fixé à deux parois longitudinales adjacentes de l'élément de structure sensiblement perpendiculaires entre elles. Il peut s'agir par exemple d'une paroi longitudinale horizontale et d'une paroi longitudinale verticale, notamment situées en partie inférieure de l'élément de structure. Une fixation le long de deux parois longitudinales adjacentes sensiblement perpendiculaires peut permettre de renforcer la fixation de l'élément support en offrant deux surfaces d'appui de l'élément support contre l'élément de structure. En outre, il peut permettre de faciliter le montage de l'élément support, notamment lorsque l'une des parois longitudinales s'étend verticalement, du côté de l'élément de structure opposé au compartiment moteur.

Les moyens de maintien de ladite au moins une portion de câble sur ledit élément support peuvent comprendre au moins une bande de serrage, de préférence au moins deux bandes de serrage, notamment à auto blocage, entourant transversalement l'élément support et la ou les portions de câble, dans leur totalité. Ces bandes de serrage autobloquantes ou auto agrippantes, éventuellement flexibles, peuvent être de type « serre Flex® », de préférence en matériau polymère afin d'éviter de blesser les câbles.

Avantageusement et de manière non limitative, la structure avant selon l'invention peut comprendre des moyens de positionnement de l'élément support relativement à l'élément de structure, notamment relativement à au moins un axe longitudinal, vertical ou transversal de la structure avant. Ceci permet notamment de monter l'élément support de manière rapide et identique sur chaque structure avant de véhicule.

En particulier, lesdits moyens de positionnement peuvent comprendre au moins un clip de positionnement s'étendant selon l'un des axes de la structure avant et traversant un orifice correspondant de l'élément de structure. Ce clip peut être réalisé d'une pièce avec l'élément support ou être une pièce rapportée.

Un tel moyen de positionnement peut notamment permettre un pré-maintien de l'élément support sur l'élément de structure avant sa fixation. Le clip peut ainsi être un élément cylindrique dont la tête élargie peut s'encliqueter dans un orifice de l'élément de structure.

Ces éléments de positionnement présentent également l'avantage de nécessiter peu de modification des éléments de structure existant, seule la réalisation d'orifices étant requise.

En variante ou en combinaison, lesdits moyens de positionnement peuvent comprendre au moins une patte de positionnement en appui contre une paroi de l'élément de structure selon une direction parallèle à l'un des axes de la structure avant. Un tel moyen de positionnement présente l'avantage d'être simple à réaliser et à mettre en oeuvre, facilitant ainsi le montage de l'élément support. Notamment, cette patte peut être réalisée d'une pièce avec l'élément support.

Avantageusement et de manière non limitative, les moyens de fixation peuvent comprendre au moins deux vis de fixation s'étendant selon l'un des axes de la structure avant et vissées dans un alésage fileté prévu à cet effet de l'élément support.

Ces vis peuvent être insérées dans un orifice d'une paroi de l'élément de structure, par exemple une paroi longitudinale, notamment une paroi longitudinale inférieure verticale.

Avantageusement, les moyens de positionnement et les moyens de fixation peuvent être conformés pour positionner l'élément support sur l'élément de structure relativement à chacun des trois axes longitudinal, vertical et transversal de la structure avant. On peut par exemple prévoir un clip de pré-maintien, une patte de positionnement et un ensemble de deux vis pour le positionnement relativement à chacun des trois axes.. Un doigt de positionnement supplémentaire peut être prévu pour le positionnement selon le troisième axe de la structure avant.

L'élément support peut avantageusement comprendre une ou deux empreintes longitudinales, ces dernières étant alors juxtaposées longitudinalement.

Lorsque l'élément support comprend plusieurs empreintes juxtaposées, elles s'étendent de préférence dans un même plan, leur concavité étant dirigée dans une même direction.

La ou les empreintes d'un élément support présentent de préférence une forme complémentaire de la forme de la portion de câble à recevoir.

Ainsi, chaque empreinte longitudinale de l'élément support peut présenter une section transversale en forme de C, d'arc de cercle, ou de demi-cercle.

La longueur de l'élément support pourra être choisie en fonction de la longueur de câble que l'on souhaite soutenir, de l'environnement de l'élément de structure et du positionnement du dispositif électrique raccordé au câble. A titre d'exemple, cette longueur peut être de 450 à 550 mm, de préférence de l'ordre de 500 mm.

Avantageusement et de manière non limitative, l'élément support peut présenter une forme de goulotte ouverte longitudinalement, dont une face comporte au moins une empreinte recevant chacune une portion de câble sensiblement dans un même plan et dont la face opposée est solidarisée à une paroi de l'élément de structure.

Un tel élément support peut ainsi être fabriqué avec peu de matière et de manière simple, par exemple en matériau polymère, notamment par moulage.

La structure avant selon l'invention permet ainsi une fixation de câbles d'alimentation électrique qui est simple et facile à mettre en place. L'invention est plus particulièrement adaptée aux structures avant équipées d'un ou plusieurs petits dispositifs électriques, désignés par l'acronyme anglais « SED » (« Small Electric Device »). Un tel petit dispositif électrique est une machine électrique qui peut présenter une ou plusieurs des fonctions suivantes :
- apporter une puissance et un couple au moteur thermique du véhicule, notamment dans les phases de démarrage, décollage et roulage, généralement à bas régime et/ou faible vitesse,
- participer à la recharge d'une batterie électrique,
- apporter l'énergie nécessaire au redémarrage du moteur après un arrêt temporaire (fonction appelée « stop and start » en terminologie anglo-saxonne).

Ce type de dispositif utilise par exemple des câbles d'un diamètre de l'ordre de 15 à 20 mm, par exemple de 18 mm, qui sont relativement lourds, et qui peuvent ainsi être maintenus de manière efficace grâce à l'agencement de la présente invention.

L'élément de structure auquel est fixé l'élément support peut être une traverse ou un longeron et sera choisi en fonction de l'emplacement du dispositif électrique à alimenter. Pour un dispositif électrique situé vers l'avant de la structure avant, l'élément de structure peut avantageusement être un longeron. On peut éventuellement prévoir plusieurs éléments support fixés à différents éléments de structure en fonction de la position du dispositif électrique ou dans le cas de plusieurs dispositifs électriques disposés en des endroits distincts du compartiment moteur.

L'invention concerne également un véhicule automobile comprenant une structure avant selon l'invention, notamment une structure avant équipée d'un ou plusieurs SED.

L'invention est maintenant décrite en référence aux dessins annexés, non limitatifs, dans lesquels :
- la figure 1 représente une vue de dessus d'une structure avant selon un mode de réalisation de l'invention ;
- la figure 2 est une vue en perspective d'un élément support de câble visible sur la figure 1 sur un longeron,
- la figure 3 est une vue en perspective du longeron de la figure 1 du côté où l'élément support de la figure 2 est visible,
- la figure 4 est une vue de côté du longeron de la figure 3, du côté opposé à l'élément support.

Dans la présente description, les termes avant, arrière, supérieur, inférieur, font référence aux directions avant et arrière du véhicule, lorsque la structure avant est montée sur le véhicule. Les axes X, Y, Z, correspondent respectivement à l'axe longitudinal (d'avant en arrière), transversal et vertical du véhicule, lorsque cette structure avant est montée dans le véhicule.

Dans la mesure où la direction des éléments de structure longitudinaux de la structure avant définit l'axe longitudinal de la structure avant, et la direction des éléments de structure transversaux définit l'axe transversal de la structure avant, les axes longitudinal, transversal et vertical du véhicule et de la structure avant sont confondus lorsque la structure avant est montée dans le véhicule.

Par sensiblement horizontal, longitudinal ou vertical, on entend une direction/un plan formant un angle d'au plus ±20°, voire d'au plus ±10°, avec une direction/un plan horizontal, longitudinal ou vertical.

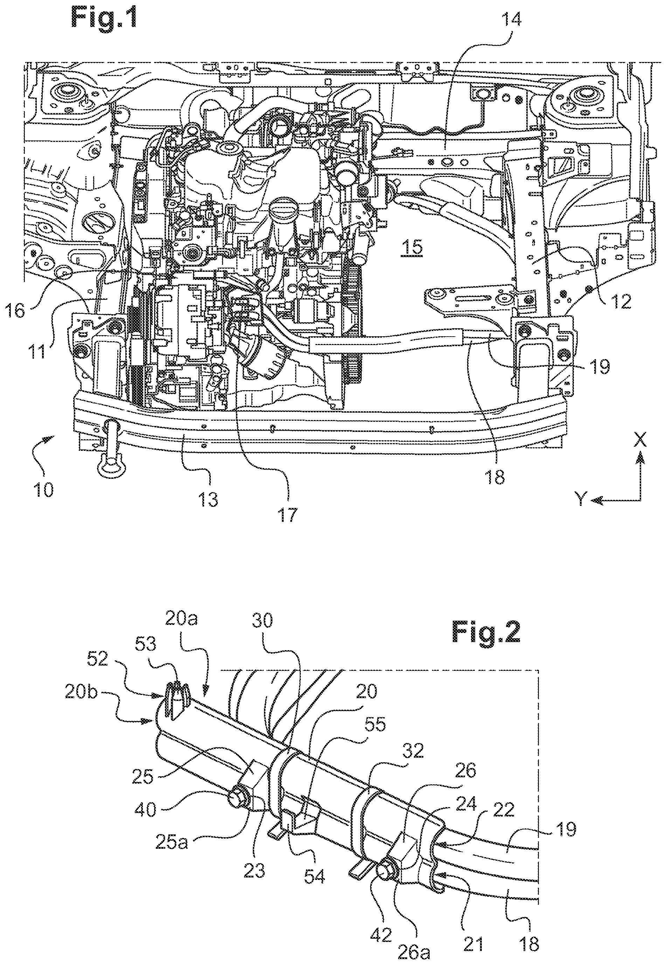

La figure 1 représente une structure avant 10 de véhicule automobile comprenant deux longerons 11, 12 s'étendant longitudinalement reliés par deux traverses : une traverse avant 13 servant notamment au support du bouclier du véhicule (non représenté) et une traverse arrière 14 supportant notamment la planche de bord du véhicule (non représentée). Ces longerons 11, 12 et traverses 13, 14 forment des éléments de structure longitudinaux et transversaux respectivement, délimitant le compartiment moteur 15 du véhicule, dans lequel est notamment situé le groupe motopropulseur 16 du véhicule.

Ces éléments de structure sont des profilés de section fermée ou ouverte, les longerons 11, 12 représentés étant de section fermée.

La structure avant 10 comprend également un dispositif électrique 17 positionné à l'intérieur du compartiment moteur 15 et deux câbles 18, 19 d'alimentation électrique associés dont une extrémité est connectée audit dispositif électrique 17 et dont l'autre extrémité est destinée à être connectée à une batterie (non représentée), généralement située à l'arrière du véhicule, au-delà de la traverse arrière 14 suivant l'axe longitudinal X.

Selon l'invention la structure avant 10 comprend :
- un élément support 20 allongé comprenant deux empreintes longitudinales 21, 22 recevant chacune une portion d'un câble 18, 19 respectivement sur toute la longueur de la portion,
- des moyens de maintien 30, 32 de ces portions de câble 18, 19 sur l'élément support 20,
- des moyens de fixation 40, 42 de l'élément support 20 sur un élément de structure.

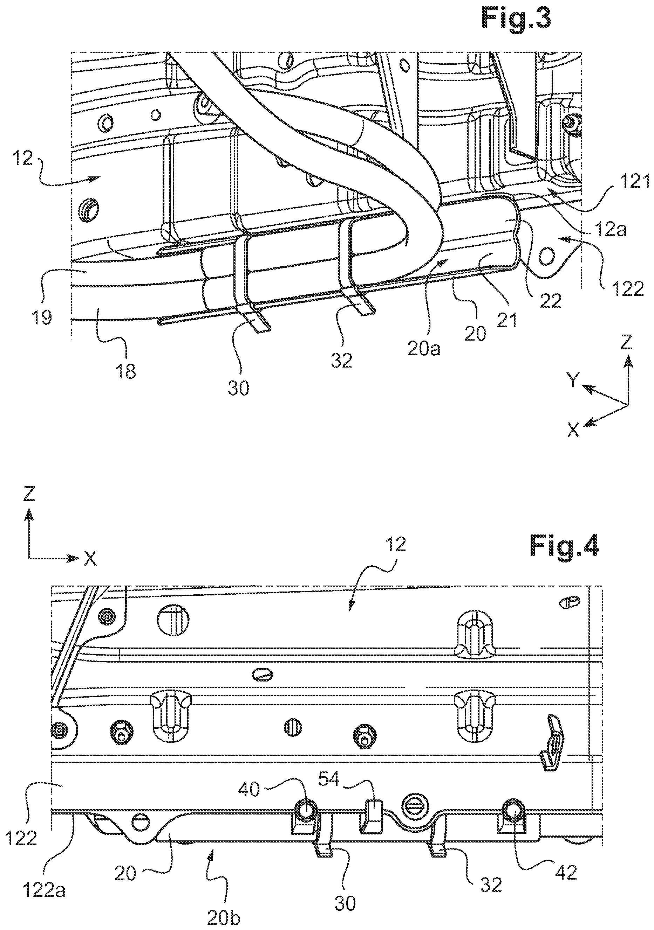

Dans l'exemple représenté, l'élément support 20 est fixé sur un longeron 12, notamment sur deux parois longitudinales adjacentes 121, 122 du longeron 12, formant des parois inférieures du longeron, situées en regard du sol lorsque la structure avant 10 est montée sur le véhicule (figures 3, 4). Le longeron 12 présente une section fermée parallélépipédique, dont la paroi longitudinale 121 forme une paroi inférieure sensiblement horizontale. La paroi longitudinale 122 est une paroi longitudinale inférieure sensiblement verticale, située du côté du longeron opposé au compartiment moteur 15. Cette paroi longitudinale 122 fait saillie du longeron 12 en direction du sol. Ces deux parois longitudinales 121, 122 sont donc perpendiculaires et situées sur le dessous du longeron 12, autrement dit en-dessous de celui-ci.

L'élément support 20 est représenté plus en détail sur les figures 2 à 4.

Cet élément support 20 présente une forme de goulotte ouverte longitudinalement, dont une face 20a (visible figure 3) comporte les deux empreintes 21, 22 recevant chacune une portion de câble 18, 19 sensiblement dans un même plan et dont la face opposée 20b (visible figures 2 et 4) est solidarisée à une paroi de l'élément de structure, ici la paroi longitudinale verticale 122, tel que visible sur les figures 3 et 4.

Les empreintes longitudinales 21, 22 sont ainsi juxtaposées longitudinalement sensiblement dans un même plan, leurs concavités étant dirigées dans une même direction. Elles présentent chacune une section transversale en forme de C, dont les dimensions correspondent sensiblement au diamètre d'un câble 18 ou 19. Dans l'exemple représenté, ces empreintes longitudinales 21, 22 sont sensiblement identiques et reçoivent des câbles 18, 19 de même dimension.

Ces câbles 18, 19 sont maintenus sur l'élément support 20 par des moyens de maintien 30, 32 qui se présentent sous la forme de bandes de serrage autobloquantes dans l'exemple des figures, ces bandes de serrage entourant à la fois l'élément support 20 et les deux câbles 18, 19.

Les moyens de fixation 40, 42 de l'élément support 20 représenté sont des vis 40, 42 coopérant avec des alésages filetés 23, 24 respectivement de l'élément support, lesquels débouchent sur la face 20b de l'élément support 20, du côté opposé aux empreintes 21, 22, et sont réalisés à l'intérieur des protubérances 25, 26 respectivement de l'élément support 20 (figure 2). Avantageusement, ces protubérances 25, 26 présentent chacune une face plane 25a, 26a, laquelle peut être plaquée contre la paroi longitudinale inférieure 122 du longeron 12, pour assurer un appui plan stable à l'élément support 20 sur cette paroi. En variante, la totalité de cette face 20b de l'élément support pourrait être plane.

La paroi longitudinale 122 peut ainsi être maintenue entre les vis 40, 42 la traversant et l'élément support 20 en appui contre les protubérances 25, 26, ces vis assurant ainsi une fixation suivant l'axe transversal Y de la structure avant.

L'élément support 20 comprend également des moyens de positionnement 52, 54 relativement au longeron 12, notamment relativement à au moins un axe longitudinal, vertical ou transversal de la structure avant.

L'élément support 20 comprend un clip de positionnement 52, lequel présente une tête 53 élargie et qui coopère avec un orifice 12a réalisé dans la paroi longitudinale inférieure 121 du longeron 12 (figure 3). Ce clip de positionnement 52 s'étend ainsi suivant une direction verticale Z de la structure avant 10 et permet ainsi un positionnement sur le longeron, suivant les axes X et Y du véhicule et plus particulièrement suivant l'axe Y, ainsi qu'un blocage en translation de l'élément support 20 suivant les axes X et Y.

L'élément support 20 comprend enfin une patte de positionnement 54 en appui contre la paroi longitudinale verticale 122 du longeron 12 selon une direction verticale Z. Dans l'exemple représenté, cette patte de positionnement 54 fait saillie de la face 20b de l'élément support 20 et forme un logement 55 en forme de U lequel peut recevoir le bord libre 122a de la paroi longitudinale verticale 122, tel que visible figure 4, ce qui permet un blocage en rotation autour de l'axe Z de l'élément support 20.

La fixation des câbles 18, 19 sur le longeron 12 est maintenant décrite. Les portions de câbles 18, 19 à immobiliser sont positionnées à l'intérieur des empreintes longitudinales 21, 22 respectivement, puis les éléments de maintien 30, 32 sont mis en place autour de l'élément support 20 et des câbles 18, 19, transversalement à l'élément support 20 et serrés. L'ensemble est ensuite positionné contre les parois longitudinales 121 et 122 du longeron 12 en introduisant le clip de positionnement 52 à l'intérieur de l'orifice correspondant 12a du longeron. L'élément support 20 est alors pré-maintenu par le clip de positionnement 52. La position de l'élément support 20 peut ensuite être ajustée verticalement jusqu'à ce que le bord 122a de la paroi longitudinale verticale 122 soit en appui au fond du logement 55 de la patte 54, puis les vis de fixation 40, 42, lesquelles traversent des orifices (non représentés) de la paroi longitudinale verticale 122, sont vissées à l'intérieur des alésages 23, 24, appliquant la paroi longitudinale verticale 122 contre la face 20b de l'élément support 20 et plus particulièrement contre les faces planes 25a, 25b des protubérances 25, 26. Un tel vissage « à l'aveugle » est possible grâce aux alésages 23, 24 formant des écrous cages et situés en regard des orifices de la paroi longitudinale verticale 122 traversés par les vis 40, 42. On comprend ainsi que cette étape de vissage peut être effectuée depuis l'extérieur de la structure avant, en tenant d'une seule main l'élément support 20, de sorte que le vissage peut être réalisé simultanément de l'autre main. Un tel montage est donc relativement facile et rapide à réaliser.

## Revendications

1. Structure avant (10) de véhicule automobile comprenant :
- un compartiment moteur (15),
- des éléments de structure longitudinaux (11, 12) et transversaux (13, 14) délimitant le compartiment moteur (15),
- au moins un dispositif électrique (17) positionné à l'intérieur du compartiment moteur (15) et au moins un câble (18, 19) d'alimentation électrique associé dont une extrémité est connectée audit dispositif électrique et dont l'autre extrémité est destinée à être connectée à une batterie,
- au moins un élément support (20) allongé comprenant au moins une empreinte longitudinale (21, 22) recevant une portion du câble (18, 19) sur toute la longueur de ladite portion,
- des moyens de maintien (30, 32) de ladite au moins une portion de câble sur ledit élément support,
- des moyens de fixation (40, 42) dudit élément support sur un élément de structure (12) qui est un longeron, l'élément de structure (12) comprenant une paroi longitudinale inférieure (121), ledit élément support (20) étant positionné le long de cette paroi, l'élément support (20) présentant une forme de goulotte ouverte longitudinalement, dont une face (20a) comporte au moins une empreinte (21, 22) recevant chacune une portion de câble sensiblement dans un même plan et dont la face opposée (20b) est solidarisée à une paroi de l'élément de structure, la paroi longitudinale inférieure (121) étant en outre située sur le dessous du longeron.

2. Structure avant (10) la revendication 1, **caractérisée en ce que** l'élément de structure (12) comprend deux parois longitudinales adjacentes (121, 122) sensiblement perpendiculaires entre elles et **en ce que** ledit élément support (20) est fixé à ces deux parois longitudinales.

3. Structure avant (10) selon l'une des revendications 1 ou2, **caractérisée en ce qu'**elle comprend des moyens de positionnement de l'élément support (20) relativement à l'élément de structure (12), notamment relativement à au moins un axe longitudinal, vertical ou transversal de la structure avant.

4. Structure avant (10) selon la revendication 3, **caractérisée en ce que** lesdits moyens de positionnement comprennent l'un au moins des éléments suivants :
- au moins un clip de positionnement (52) s'étendant selon l'un des axes de la structure avant et traversant un orifice correspondant dudit élément de structure,
- au moins une patte de positionnement (54) en appui contre une paroi de l'élément de structure selon une direction parallèle à l'un des axes de la structure avant.

5. Structure avant (10) selon l'une des revendications 1 à 4, **caractérisée en ce que** lesdits moyens de maintien comprennent au moins une bande de serrage (30, 32), notamment autobloquante, de préférence au moins deux bandes de serrage, entourant transversalement l'élément support (20) et la ou les portions de câble (18, 19), dans leur totalité.

6. Structure avant (10) selon l'une des revendications 1 à 5, **caractérisée en ce que** les moyens de fixation (40, 42) comprennent au moins deux vis de fixation s'étendant selon l'un des axes de la structure avant et vissées dans un alésage fileté (23, 24) prévu à cet effet de l'élément support.

7. Structure avant (10) selon l'une des revendications 1 à 6, **caractérisée en ce que** chaque empreinte longitudinale (21, 22) de l'élément support présente une section transversale en forme de C, d'arc de cercle, ou de demi-cercle.

8. Véhicule automobile comprenant au moins une structure avant (10) selon l'une des revendications 1 à 7.

## Patentansprüche

1. Frontstruktur (10) eines Kraftfahrzeugs, die enthält:
- einen Motorraum (15),
- Längs- (11, 12) und Querstrukturelemente (13, 14), die den Motorraum (15) begrenzen,
- mindestens eine elektrische Vorrichtung (17), die im Inneren des Motorraums (15) positioniert ist, und mindestens ein zugeordnetes Stromversorgungskabel (18, 19), von dem ein Ende mit der elektrischen Vorrichtung verbunden und das andere dazu bestimmt ist, mit einer Batterie verbunden zu werden,
- mindestens ein längliches Trägerelement (20), das mindestens eine Längseinbuchtung (21, 22) enthält, die einen Abschnitt des Kabels (18, 19) über die ganze Länge des Abschnitts aufnimmt,
- Halteeinrichtungen (30, 32) des mindestens einen Kabelabschnitts auf dem Trägerelement,
- Befestigungseinrichtungen (40, 42) des Trägerelements auf einem Strukturelement (12), das ein Längsträger ist,
wobei das Strukturelement (12) eine untere Längswand (121) enthält, wobei das Trägerelement (20) entlang dieser Wand positioniert ist, wobei das Trägerelement (20) die Form einer längs geöffneten Rinne aufweist, von der eine Seite (20a) mindestens eine Einbuchtung (21, 22) aufweist, die je einen Kabelabschnitt im Wesentlichen in der gleichen Ebene aufnimmt, und deren gegenüberliegende Seite (20b) fest mit einer Wand des Strukturelements verbunden ist, wobei die untere Längswand (121) sich außerdem an der Unterseite des Längsträgers befindet.

2. Frontstruktur (10) Anspruch 1, **dadurch gekennzeichnet, dass** das Strukturelement (12) zwei benachbarte Längswände (121, 122) im Wesentlichen lotrecht zueinander enthält, und dass das Trägerelement (20) an diesen zwei Längswänden befestigt ist.

3. Frontstruktur (10) nach einem der Ansprüche 1 oder 2, **dadurch gekennzeichnet, dass** sie Positioniereinrichtungen des Trägerelements (20) bezüglich des Strukturelements (12) enthält, insbesondere bezüglich mindestens einer Längsachse, senkrechten Achse oder Querachse der Frontstruktur.

4. Frontstruktur (10) nach Anspruch 3, **dadurch gekennzeichnet, dass** die Positioniereinrichtungen mindestens eines der folgenden Elemente enthalten:
- mindestens einen Positionierclip (52), der sich gemäß einer der Achsen der Frontstruktur erstreckt und eine entsprechende Öffnung des Strukturelements durchquert,
- mindestens eine Positionierlasche (54) in Auflage gegen eine Wand des Strukturelements in einer Richtung parallel zu einer der Achsen der Frontstruktur.

5. Frontstruktur (10) nach einem der Ansprüche 1 bis 4, **dadurch gekennzeichnet, dass** die Halteeinrichtungen mindestens ein Spannband (30, 32) enthalten, insbesondere selbsthemmend, vorzugsweise zwei Spannbänder, die das Trägerelement (20) und den oder die Kabelabschnitt(e) (18, 19) in ihrer Gesamtheit in Querrichtung umgeben.

6. Frontstruktur (10) nach einem der Ansprüche 1 bis 5, **dadurch gekennzeichnet, dass** die Befestigungseinrichtungen (40, 42) mindestens zwei Befestigungsschrauben enthalten, die sich gemäß einer der Achsen der Frontstruktur erstrecken und in eine zu diesem Zweck vorgesehene Gewindebohrung (23, 24) des Trägerelements geschraubt werden.

7. Frontstruktur (10) nach einem der Ansprüche 1 bis 6, **dadurch gekennzeichnet, dass** jede Längseinbuchtung (21, 22) des Trägerelements einen Querschnitt in Form eines C, eines Kreisbogens oder eines Halbkreises aufweist.

8. Kraftfahrzeug, das mindestens eine Frontstruktur (10) nach einem der Ansprüche 1 bis 7 enthält.

## Claims

1. Front structure (10) of a motor vehicle, comprising:
- an engine compartment (15),
- longitudinal (11, 12) and transverse (13, 14) structural elements delimiting the engine compartment (15),
- at least one electric device (17) positioned inside the engine compartment (15) and at least one associated electrical power supply cable (18, 19) one end of which is connected to the said electrical device and the other end of which is intended to be connected to a battery,
- at least one elongate support element (20) comprising at least one longitudinal recess (21, 22) accommodating a portion of the cable (18, 19) over the entire length of the said portion,
- retaining means (30, 32) for holding the said at least one cable portion on the said support element,
- fixing means (40, 42) for fixing the said support element to a structural element (12) which is a longeron, the structural element (12) comprising a lower longitudinal wall (121), the said support element (20) being positioned along this wall, the support element (20) having a trough shape open longitudinally, of which one face (20a) comprises at least one recess (21, 22) each accommodating a portion of cable substantially in one and the same plane and of which the opposite face (20b) is secured to a wall of the structural element, the lower longitudinal wall (121) being further situated on the underside of the longeron.

2. Front structure (10) Claim 1, **characterized in that** the structural element (12) comprises two adjacent longitudinal walls (121, 122) that are substantially mutually perpendicular, and **in that** the said support element (20) is fixed to these two longitudinal walls.

3. Front structure (10) according to one of Claims 1 and 2, **characterized in that** it comprises positioning means for positioning the support element (20) relative to the structural element (12), notably relative to at least one longitudinal, vertical or transverse axis of the front structure.

4. Front structure (10) according to Claim 3, **characterized in that** the said positioning means comprise at least one of the following elements:
- at least one positioning clip (52) extending along one of the axes of the front structure and passing through a corresponding orifice of the said structural element,
- at least one positioning tab (54) pressing against a wall of the structural element in a direction parallel to one of the axes of the front structure.

5. Front structure (10) according to one of Claims 1 to 4, **characterized in that** the said retaining means comprise at least one clamping band (30, 32), notably a self-locking band, preferably at least two clamping bands, transversely surrounding the support element (20) and the portion or portions of cable (18, 19) in their entirety.

6. Front structure (10) according to one of Claims 1 to 5, **characterized in that** the fixing means (40, 42) comprise at least two fixing screws extending along one of the axes of the front structure and screwed into a tapped bore (23, 24) provided for this purpose belonging to the support element.

7. Front structure (10) according to one of Claims 1 to 6, **characterized in that** each longitudinal recess (21, 22) of the support element has a cross section in the shape of a C, an arc of a circle or a semicircle.

8. Motor vehicle comprising at least one front structure (10) according to one of Claims 1 to 7.
